# EUROPEAN PATENT APPLICATION

(11) **EP 2 942 209 A1**
(43) Date of publication of application: **11.11.2015**
(21) Application number: 15166867.0
(22) Date of filing: 08.05.2015
(51) Int. Cl.: B44F 1/04, A42B 3/06

(54) **COLOR REFLECTIVE ARTICLE AND MATERIAL STRUCTURE AND MANUFACTURING METHOD THEREOF**

(30) Priority: 09.05.2014 CN 201410195637
(71) Applicant: Su, Chun-Long, Taipei (TW)
(72) Inventor: Su, Chun-Long, Taipei (TW)
(74) Representative: Mitola, Marco

(57) **Abstract**

A color reflective article and a material structure thereof are disclosed. A material structure of a housing (100) of the color reflective article has a housing plastic layer (150) and a color reflecting structure constituted by a transparent substrate layer (110), a reflecting surface (111) , a reflecting layer (120), a color pattern layer (130), and a protective film (140), which renders the color reflective article to have a color reflection effect entirely.

## Description

### Field of Invention

The present invention relates to a material structure. More particularly, the present invention relates to a color reflective article and a material structure and a manufacturing method thereof.

### Description of Related Art

In the past, luggage cases, trolley cases, suitcases, etc. are objects with high-hardness housings. In order to achieve aesthetic purposes, their design is usually varied by color. However, under low light during the night, it is more difficult to identify such objects. In addition, when people travel abroad or domestically, the tourist spots are sometimes in rural areas where night lighting equipments and light are quite insufficient, objects carried such as the luggage cases thus become more difficult to identify.

Although reflective stickers can be attached to the housings of objects such as luggage cases to clearly mark the positions of the luggage cases in a place where light is insufficient to enhance the safety and conspicuousness of the objects, however, the color of the reflective stickers is monotonous, which in turn destroys the original aesthetic design of the objects such as the luggage cases. Even more severely, the reflective stickers are likely to fall off. Once the reflective stickers fall off or partially peel off to stick out, not only are the aesthetic appearances of the objects such as the luggage cases affected, but the reflective safety of the objects is also impacted. In addition, since the prior art reflective sticker can only be attached to local regions of the housings of the objects such as the luggage cases, the objects are not able to reflect light entirely. If the reflective sticker is attached to an improper position, the conspicuous and alert effects on the object to which the reflective sticker is attached are also affected.

For the forgoing reasons, there is a need to solve the above-mentioned problems by providing a color reflective article and a material structure and a manufacturing method thereof.

### SUMMARY

The present invention provides an integrated color reflective article having safety and aesthetic effects entirely and a material structure and a manufacturing method thereof.

According to one aspect of the present invention, a color reflective article having a housing is provided. A cross-sectional structure of the housing comprises a transparent substrate layer, a reflecting layer, a color pattern layer, a protective film, and a housing plastic layer. A back of the transparent substrate layer has a reflecting surface. The reflecting layer is located on a back of the reflecting surface. The color pattern layer is located on a surface of the transparent substrate layer. The protective film is located on a surface of the color pattern layer. The housing plastic layer is located on a back of the reflecting layer or on a surface of the protective film.

According to another one aspect of the present invention, the invention provides a material structure for manufacturing a housing of a color reflective article. The material structure comprises a transparent substrate layer, a reflecting layer, a color pattern layer, a protective film, and a housing plastic layer. A back of the transparent substrate layer has a reflecting surface. The reflecting layer is located on a back of the reflecting surface. The color pattern layer is located on a surface of the transparent substrate layer. The protective film is located on a surface of the color pattern layer. The housing plastic layer is located on a back of the reflecting layer or on a surface of the protective film.

According to further another one aspect of the present invention, the invention further provides a manufacturing method of a material structure. The material structure is for manufacturing a housing of a color reflective article. The manufacturing method comprises the steps of: preparing a transparent substrate layer; pressing a reflecting surface on a back of the transparent substrate layer; electroplating a reflecting layer on a back of the reflecting surface; printing a color pattern layer on a surface of the transparent substrate layer; attaching a protective film to a surface of the color pattern layer; and assembling a housing plastic layer on a back of the reflecting layer or on a surface of the protective film. A material structure is thus manufactured according to the above-mentioned steps.

According to one embodiment of the present invention, the reflecting surface is in a pyramidal shape.

According to one embodiment of the present invention, a material of the transparent substrate layer is selected from the group consisting of polyvinyl chloride, polyethylene terephthalate, and thermoplastic polyurethane.

According to one embodiment of the present invention, the reflecting layer is a metal reflecting layer.

According to one embodiment of the present invention, the metal reflecting layer is an aluminum reflecting layer.

According to one embodiment of the present invention, a material of the protective film is selected from the group consisting of polyvinyl chloride and polyethylene terephthalate.

According to one embodiment of the present invention, the housing plastic layer is located on the surface of the protective film, and the housing plastic layer is transparent.

According to one embodiment of the present invention, a material of the housing plastic layer is selected from the group consisting of acrylonitrile butadiene styrene copolymers, polycarbonate, polyethylene terephthalate, and polyvinyl chloride.

According to one embodiment of the present invention, the housing of the color reflective article has the housing plastic layer and the color reflecting structure constituted by the transparent substrate layer, the reflecting surface, the reflecting layer, the color pattern layer, and the protective film, which renders the color reflective article to have a color reflection effect entirely.

According to one embodiment of the present invention, the material structure has the housing plastic layer and the color reflecting structure constituted by the transparent substrate layer, the reflecting surface, the reflecting layer, the color pattern layer, and the protective film. The material structure may be processed by utilizing, for example hot pressing, injection molding, etc., to fabricate a housing of a color reflective article. The color reflective article thus generates the color reflection effect entirely by the color reflective structure.

According to one embodiment of the present invention, the manufacturing method of the material structure can fabricate the above material structure simply.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Fig. 1 depicts an outside view of a color reflective article according to one embodiment of this invention;
Fig. 2 depicts a cross-sectional schematic view of a material structure of portion A of the color reflective article in Fig. 1; and
Fig. 3 depicts a flow chart of a manufacturing method of a material structure according to one embodiment of this invention.

### DESCRIPTION OF THE EMBODIMENTS

Reference will now be made in detail to the present embodiments of the invention, examples of which are illustrated in the accompanying drawings. Wherever possible, the same reference numbers are used in the drawings and the description to refer to the same or like parts.

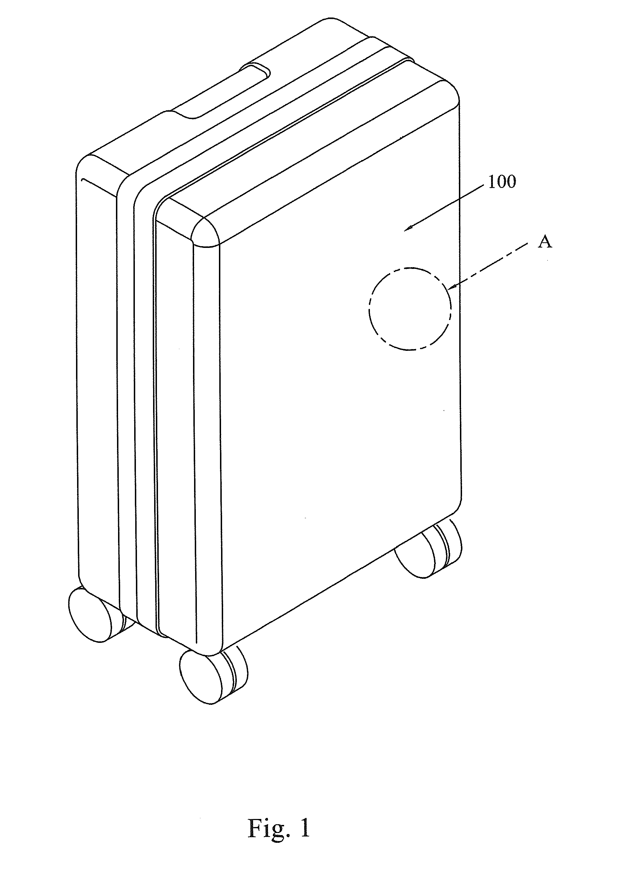

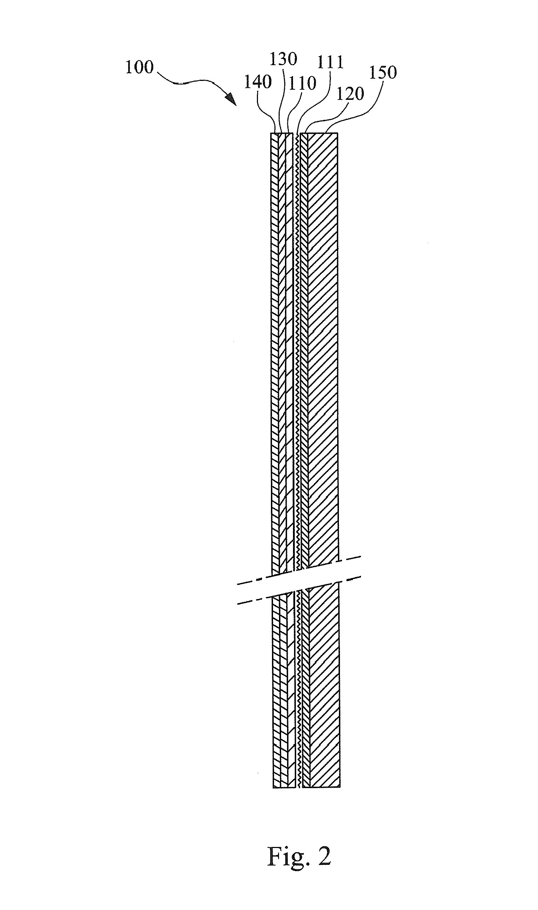

A description is provided with reference to Fig. 1 and Fig. 2. According to one embodiment of this invention, a color reflective article has a housing 100. A cross-sectional structure of the housing 100 comprises a transparent substrate layer 110, a reflecting layer 120, a color pattern layer 130, a protective film 140, and a housing plastic layer 150.

The color reflective article may be any object having the hard housing 100, such as a luggage case, a safety helmet, a briefcase, a pet stroller, an outdoor garbage can, etc. In the drawings, a luggage case is taken for example.

A material of the transparent substrate layer 110 is selected from the group consisting of polyvinyl chloride (PVC), polyethylene terephthalate (PET), and thermoplastic polyurethane (TPU). A back of the transparent substrate layer 110 has a reflecting surface 111 in a pyramidal shape which has a good light reflection effect.

The reflecting layer 120 is a metal reflecting layer having a good light reflection effect, such as an aluminum reflecting layer. The reflecting layer 120 is located on a back of the reflecting surface 111 of the transparent substrate layer 110, such that light can be fully reflected by the reflecting layer 120 when passing through the transparent substrate layer 110 and the reflecting surface 111 of the transparent substrate layer 110.

The color pattern layer 130 is located on a surface of the transparent substrate layer 110. The color pattern layer 130 is made of ink which is color ink has a high transmittance.

A material of the protective film 140 is selected from the group consisting of PVC and PET. The protective film 140 is located on a surface of the color pattern layer 130 and configured to protect the color pattern layer 130 from being scratched. The above-mentioned transparent substrate layer 110, the reflecting surface 111, the reflecting layer 120, the color pattern layer 130, and the protective film 140 constitute a color reflecting structure. The color pattern layer 130 can reflect light outwardly through the reflecting surface 111 and the reflecting layer 120 so as to have a color reflection effect.

The housing plastic layer 150 having a considerable hardness is a main material of the housing 100. A material of the housing plastic layer 150 is selected from the group consisting of acrylonitrile butadiene styrene (ABS) copolymers, polycarbonate (PC), PET, and PVC. The housing plastic layer 150 is located on a back of the reflecting layer 120 or on a surface of the protective film 140. When the housing plastic layer 150 is located on the surface of the protective film 140, the housing plastic layer 150 must be transparent.

According to one embodiment of the present invention, the housing 100 of the color reflective article has the housing plastic layer 150 and the color reflecting structure constituted by the transparent substrate layer 110, the reflecting surface 111, the reflecting layer 120, the color pattern layer 130, and the protective film 140, which renders the color reflective article to generate a color reflection effect entirely so as to achieve the optimal safety and conspicuous effects. In addition, the color reflecting structure is integrally combined with the housing 100, which will not fall off and is firm in use.

Similarly, a description is provided with reference to Fig. 2. A material structure according to one embodiment of the present invention comprises the transparent substrate layer 110 and the reflecting surface 111 thereof, the reflecting layer 120, the color pattern layer 130, the protective film 140, and the housing plastic layer 150. The transparent substrate layer 110 and the reflecting surface 111 thereof, the reflecting layer 120, the color pattern layer 130, and the protective film 140 constitute the color reflecting structure. Structures and characteristics of the transparent substrate layer 110, the reflecting surface 111, the reflecting layer 120, the color pattern layer 130, the protective film 140 and the housing plastic layer 150 are the same as described above.

According to one embodiment of the present invention, the material structure may be processed by utilizing, for example hot pressing, injection molding, etc., to fabricate a housing of a color reflective article. The color reflective article thus generates the color reflection effect entirely by the above color reflective structure to achieve the optimal safety and conspicuous effects.

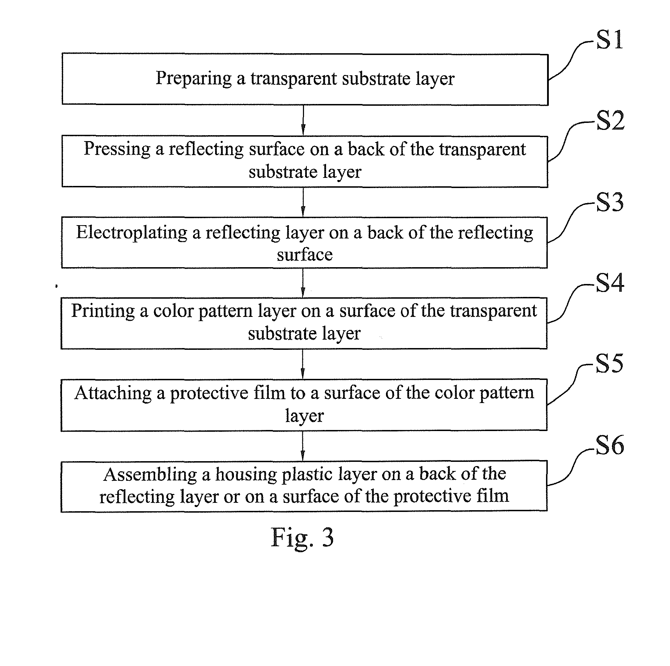

A description is provided with reference to Fig. 3. Fig. 3 depicts a flow chart of a manufacturing method of a material structure according to one embodiment of this invention for illustrating the steps of manufacturing the material structure. The manufacturing steps comprise: (1). Prepare a transparent substrate layer 110 (S1). A material of the transparent substrate layer 110 is selected from the group consisting of PVC, PET, and TPU; (2). Press a reflecting surface 111 in a pyramidal shape on a back of the transparent substrate layer 110 (S2); (3). Electroplate a reflecting layer 120 on a back of the reflecting surface 111 (S3). The reflecting layer 120 is an aluminum reflecting layer; (4). Print a color pattern layer 130 on a surface of the transparent substrate layer 110. The color pattern layer 130 is made of ink which is color ink has a high transmittance (S4); (5). Attach a protective film 140 to a surface of the color pattern layer (S5). A material of the protective film 140 is selected from the group consisting of PVC and PET; (6). Assemble a housing plastic layer 150 on a back of the reflecting layer 120 or on a surface of the protective film 140 (S6). A material of the housing plastic layer 150 is selected from the group consisting of ABS, PC, PET, and PVC. A material structure is thus manufactured according to the above-mentioned steps.

The material structure manufactured according to the above-mentioned steps comprises the housing plastic layer 150 and the color reflective structure constituted by the transparent substrate layer 110, the reflecting surface 111, the reflecting layer 120, the color pattern layer 130, and the protective film 140. The material structure may be processed by utilizing, for example hot pressing, injection molding, etc., to fabricate a housing of a color reflective article.

## Claims

1. A color reflective article having a housing (100), a cross-sectional structure of the housing (100) comprising:
a transparent substrate layer (110), a back of the transparent substrate layer (110) having a reflecting surface (111);
a reflecting layer (120) located on a back of the reflecting surface (111);
a color pattern layer (130) located on a surface of the transparent substrate layer (110);
a protective film (140) located on a surface of the color pattern layer (130); and
a housing plastic layer (150) located on a back of the reflecting layer (120) or on a surface of the protective film (140).

2. The color reflective article of claim 1, wherein the reflecting surface (111) is in a pyramidal shape.

3. The color reflective article of claim 1, wherein a material of the transparent substrate layer (110) is selected from the group consisting of polyvinyl chloride, polyethylene terephthalate, and thermoplastic polyurethane.

4. The color reflective article of claim 1, wherein the reflecting layer (120) is a metal reflecting layer.

5. The color reflective article of claim 1, wherein a material of the protective film (140) is selected from the group consisting of polyvinyl chloride and polyethylene terephthalate.

6. The color reflective article of claim 1, wherein a material of the housing plastic layer (150) is selected from the group consisting of acrylonitrile butadiene styrene copolymers, polycarbonate, polyethylene terephthalate, and polyvinyl chloride.

7. A material structure for manufacturing a housing (100) of a color reflective article, the material structure comprising:
a transparent substrate layer (110), a back of the transparent substrate layer (110) having a reflecting surface (111);
a reflecting layer (120) located on a back of the reflecting surface (111);
a color pattern layer (130) located on a surface of the transparent substrate layer (110);
a protective film (140) located on a surface of the color pattern layer (130); and
a housing plastic layer (150) located on a back of the reflecting layer (120) or on a surface of the protective film (140).

8. The material structure of claim 7, wherein the reflecting surface (111) is in a pyramidal shape.

9. The material structure of claim 7, wherein a material of the transparent substrate layer (110) is selected from the group consisting of polyvinyl chloride, polyethylene terephthalate, and thermoplastic polyurethane.

10. The material structure of claim 7, wherein the reflecting layer (120) is a metal reflecting layer.

11. The material structure of claim 7, wherein a material of the protective film (140) is selected from the group consisting of polyvinyl chloride and polyethylene terephthalate, and a material of the housing plastic layer (150) is selected from the group consisting of acrylonitrile butadiene styrene copolymers, polycarbonate, polyethylene terephthalate, and polyvinyl chloride

12. A manufacturing method of a material structure, the material structure being for manufacturing a housing (100) of a color reflective article, the manufacturing method comprising the steps of:
preparing a transparent substrate layer (110);
pressing a reflecting surface (111) on a back of the transparent substrate layer;
electroplating a reflecting layer (120) on a back of the reflecting surface (111);
printing a color pattern layer (130) on a surface of the transparent substrate layer;
attaching a protective film (140) to a surface of the color pattern layer (130); and
assembling a housing plastic layer (150) on a back of the reflecting layer (120) or on a surface of the protective film (140).

13. The manufacturing method of claim 12, wherein the reflecting surface (111) is in a pyramidal shape.

14. The manufacturing method of claim 12, wherein a material of the transparent substrate layer (110) is selected from the group consisting of polyvinyl chloride, polyethylene terephthalate, and thermoplastic polyurethane, and the reflecting layer (120) is a metal reflecting layer.

15. The manufacturing method of claim 12, wherein a material of the protective film (140) is selected from the group consisting of polyvinyl chloride and polyethylene terephthalate, and a material of the housing plastic layer (150) is selected from the group consisting of acrylonitrile butadiene styrene copolymers, polycarbonate, polyethylene terephthalate, and polyvinyl chloride.
